# EUROPEAN PATENT SPECIFICATION

(11) **EP 1 588 534 B1**
(45) Date of publication and mention of the grant of the patent: **11.07.2007**
(21) Application number: 04701969.0
(22) Date of filing: 14.01.2004
(51) Int. Cl.: H04L 29/06, H04L 12/56, H04Q 7/34

(54) **PROVISION OF MOBILITY FOR IPV4 TRAFFIC IN AN IPV6 NETWORK**
BEREITSTELLUNG VON MOBILITÄT FÜR IPV4-VERKEHR IN EINEM IPV6-NETZWERK
ETABLISSEMENT D'UNE MOBILITE POUR LE TRAFIC IPV4 AU MOYEN D'UN RESEAU IPV6

(30) Priority: 15.01.2003 US 342326
(43) Date of publication of application: 26.10.2005
(73) Proprietor: Nokia Corporation, 02150 Espoo (FI)
(72) Inventor: SUNDQUIST, Jaakko, FIN-33580 Tampere (FI)
(74) Representative: Virkkala, Jukka Antero
(86) International application number: PCT/FI2004/000020
(87) International publication number: WO 2004/064348

(56) References cited:
- EP-A1- 1 370 032
- US-A1- 2002 015 395
- US-A1- 2002 186 679
- US-A1- 2002 194 259

## Description

### BACKGROUND OF THE INVENTION

### Field of the Invention

The invention relates generally to transfer of IPv4 traffic in an IPv6 network. More particularly, the invention relates to a mechanism for providing mobility for IPv4 traffic by means of Mobile IPv6 protocol.

The protocols related to IP networks, such as the Internet, are developed by the Internet Engineering Task Force (IETF). The IETF has also been developing support for mobile IP nodes for both versions of IP (i.e. for IPv4 and IPv6). The main results of this work are the two Mobile IP protocols, Mobile IPv4 (RFC 2002) and Mobile IPv6 (work in progress, assumed to reach RFC status soon). It is possible, with the current specifications, to utilize Mobile IPv4 for the provision of mobility for IPv4 traffic and Mobile IPv6 for the provision of mobility for IPv6 traffic.

However, the above-mentioned two mobility protocols are clearly separate protocols. In other words, while there are natural similarities in the protocol mechanisms, the signaling messages are totally different. The two mobility protocols are discussed below using the terminology of the above-mentioned specifications, the same terms having the same meaning.

Both versions of Mobile IP utilize IP-in-IP tunneling to forward the packets sent to the so-called home address of the mobile node, the home address being the permanent address of the mobile node. An element called a home agent is located on the link within which the home address of the mobile node is located, i.e. on the so-called home link. The home agent captures all IP packets sent to the home address of the mobile node while the mobile node is not located on the home link, and forwards them, using IP-in-IP tunneling, to the current IP address of the mobile node, called the care-of address. Thus the destination address in the outer IP header of this IP-in-IP tunneling is the care-of address, while the destination address in the inner IP header is the home address of the mobile node.

In Mobile IPv6, the mobile node signals a change in its care-of address to the home agent by sending to the home agent the new care-of address in a message called Binding Update, which is carried in an IPv6 extension header called the Mobility Header (defined in the above-mentioned Mobile IPv6 specification). The home agent acknowledges this message by returning to the mobile node a message called Binding Acknowledgement (also carried in the Mobility Header). In Mobile IPv4, the corresponding messages are the Registration Request sent from the mobile node to the home agent and the Registration Reply sent in the opposite direction.

The mobile node may also signal its care-of address to any peer IP node with which it is communicating. These nodes are called correspondent nodes and the functionality in which the mobile node signals its care-of address to the correspondent nodes is called route optimization. In route optimization, exactly the same signaling messages are used as when the mobile node notifies a change in its care-of address to the home agent. Route optimization is a built-in feature of Mobile IPv6 and IPv6, but an add-on feature to the Mobile IPv4 protocol. Therefore, it is in practice never used with Mobile IPv4.

U.S. Patent Application Publication US 2002/0194259 A1 describes a method for routing data packets in a communication system which includes at least a subnetwork supporting a first (M)IP version and a subnetwork supporting a second (M)IP version. In this method, the mobile node is provided with a set of protocol stacks for handling data packets according to the first and second IP version and with a home address at least according to the first and the second IP version. The home agent intercepts data packets destined for the mobile node's home address regardless of their type and encapsulates each packet in a packet according to the IP version of the foreign network to which the mobile node is attached. The mobile node may register with at least a first and a second foreign network so that the respective first and second care-of addresses are simultaneously active in the home agent of the mobile node, and data packets according to at least the first and second IP version are routed to the mobile node via the home agent by using the IP version of the first and second foreign network, respectively.

U.S. Patent Application Publication US 2002/0015395 A1 discloses a method and system for inter-operability between the Mobile IP and the RSVP (Resource reSerVation Protocol) protocols. The embodiments disclosed in this document seek to solve inter-operability problems between Mobile IP and RSVP during route optimization.

U.S. Patent Application Publication US 2002/0186679 A1 discloses a mobile node supporting router connected to a network in which a Mobile IPv4/v6 operates. In order to avoid packet delay and packet discard, the router is provided with a home link interface and a foreign link interface, the latter having an encapsulating cache for storing binding information of the node and a processor for encapsulating a packet addressed to the node with a care-of address included in the binding information.

European Patent Application EP 1 370 032 A1 discloses a mobile terminal management system. In order to prevent concentration of loads on the node that serves as the foreign agent of the mobile terminals, the foreign agent functions of a plurality of mobile terminals are distributed to a first node and each radio base station belonging to the first node.

However, taking into account the facts that both Mobile IP versions can only be utilized for their respective IP versions and that their signaling messages are different, there is no real transition path from Mobile IPv4 to Mobile IPv6. Furthermore, the application of Mobile IPv4 involves various technical problems, which are mostly related to the short address used in IPv4.

Consequently, the objective of the present invention is to bring about a mechanism by which Mobile IPv6 protocol can also be used to provide mobility for IPv4 traffic, without resorting to Mobile IPv4 protocol.

### SUMMARY OF THE INVENTION

The objective of the invention is to devise a new mechanism for providing mobility for IPv4 traffic by means of the Mobile IPv6 protocol.

This objective is achieved with the solution defined in the independent claims.

In the present invention, a Binding Update message according to Mobile IPv6 is sent to indicate a change in the care-of address of the mobile node. A new binding between an IPv4 home address of the mobile node and the new IPv6 care-of address is indicated in this message by using a special address format for the IPv6 home address which is within the packet containing the Binding Update message. This special address format comprises an IPv6 address with an embedded IPv4 address. The said address format thus serves as an indication for the home agent to perform a binding update in which a new binding between the embedded IPv4 home address and the new IPv6 care-of address is created. When this binding has been created, IPv4 packets destined for the mobile node's home address can be routed to the mobile node.

The procedure of the invention can also be used between the mobile node and its correspondent node, since the mobile node uses the same Binding Update to register its current binding at the correspondent node. Therefore, the above-mentioned network node receiving a Binding Update according to the invention can be a home agent or a correspondent node.

By means of the present invention, IPv4 mobility support can be achieved in an uncomplicated way without using two different protocols for mobility management. Furthermore, the problematic use of Mobile IPv4 can be avoided and a transition to Mobile IPv6 can be made without resorting to Mobile IPv4. Using Mobile IPv6 for handling mobility for both IP versions right from the start precludes the need for expensive transition from Mobile IPv4 to Mobile IPv6 later on.

Other features and advantages of the invention will become apparent through reference to the following detailed description and accompanying drawings.

### BRIEF DESCRIPTION OF THE DRAWINGS

In the following, the invention and its preferred embodiments are described more closely with reference to the examples shown in FIG. 1 to 7 in the appended drawings, wherein:

FIG. 1a and 1b illustrate a communication system where the present invention can be used,

FIG. 2 illustrates the general structure of an IPv6 packet containing a Binding Update message,

FIG. 3 is a flow chart illustrating the operation of the mobile node when its care-of address changes,

FIG. 4 is a flow chart illustrating the operation of the home agent or correspondent node when a Binding Update is received from the mobile node,

FIG. 5a to 5c illustrate different IPv6 address formats which can be utilized in the present invention,

FIG. 6 illustrates the insertion of the functionalities of the invention into the home agent, and

FIG. 7 illustrates the insertion of the functionalities of the invention into the mobile terminal.

### DETAILED DESCRIPTION OF THE PREFERRED EMBODIMENTS

Currently, mechanisms in which IPv6 packets are tunneled through IPv4 tunnels are common in various IPv4-to-IPv6 transition mechanisms, for example. Although less common, mechanisms in which IPv4 packets are tunneled through IPv6 tunnels are also known. The starting point of the present invention is that an IPv6 tunnel is established between the mobile node and its home agent, whereby IPv4 packets destined for the home address of the mobile node are tunneled through this tunnel to the current location of the mobile node. Tunnels of this type will be more common in the future when IPv6 is the dominant part of the Internet.

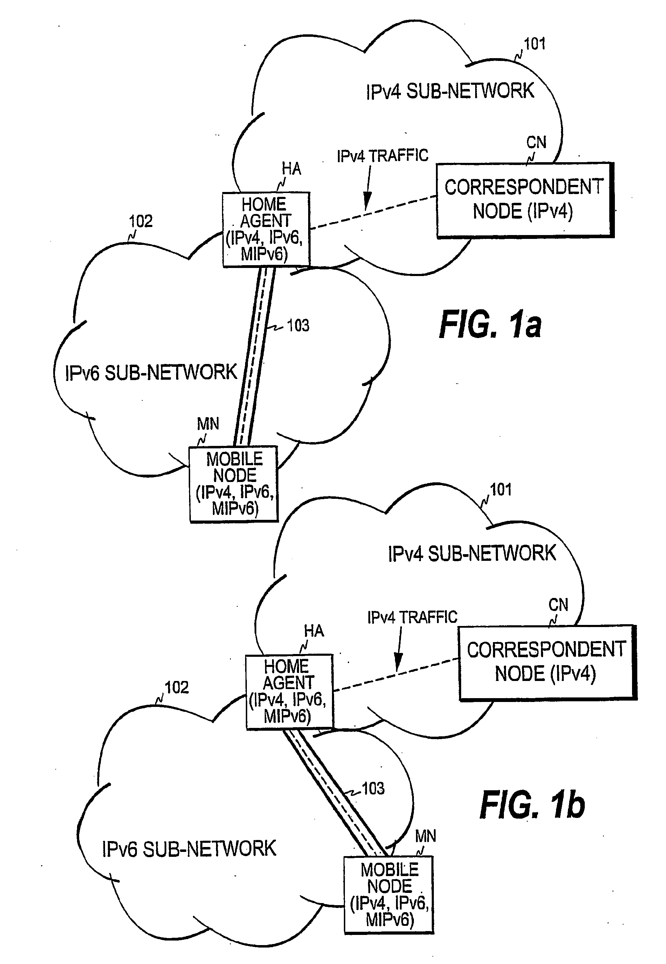

FIG. 1a and 1b illustrate a typical communication network in which the present invention can be applied. The network comprises an IPv4 subnetwork 101 and an IPv6 sub-network 102. A mobile node MN, which is IPv6 and IPv4 compatible, i.e. a so-called dual stack device, moves in the IPv6 subnetwork 102 while being in connection with a correspondent node CN located in the IPv4 sub-network. It is thus assumed here that the mobile node has been assigned an IPv4 home address and also an IPv6 home address, even though only the former relates directly to the actual invention. The addresses have been assigned by known methods, which are not essential in view of the actual invention. The mobile node may be a laptop, PDA equipment, an intelligent phone or other such mobile terminal, while the correspondent node may be another mobile node, a fixed station or a server, for example.

As mentioned above, IPv4-in-IPv6 tunneling is used to forward the IPv4 packets sent to the (IPv4) home address of the mobile node. The home agent HA, which is a MIPv6 home agent with an IPv4/IPv6 dual stack, captures all IPv4 packets sent by the correspondent node to the home address of the mobile node, while the mobile node is in the IPv6 sub-network, and forwards them using IPv4-in-IPv6 tunneling to the current care-of address of the mobile node. Thus there is a tunnel 103 from the home agent to the mobile node, through which IPv4 packets encapsulated within IPv6 packets are transferred. In FIGS. 1a and 1b, the IPv4 traffic is denoted by dashed lines, while the solid lines around a dashed line illustrate IPv4-in-IPv6 tunneling. Although not shown in the figures, several other network elements than the home agent may be located between the correspondent node and the mobile node.

It is assumed here that the mobile node MN is first located as shown in FIG. 1a and moves then to a new location (i.e. to a new care-of address) shown in FIG. 1b. In other words, the mobile node changes its attachment to the network. When this happens, the tunnel has to be redirected to the new location, as shown in FIG. 1b.

In an environment as described above, the problem of using Mobile IPv6 for the provision of mobility for IPv4 traffic is thus not how the IPv4 packets can be sent to the mobile node, but rather how the mobile-node can inform the home agent, or the correspondent node, that all traffic destined for a particular IPv4 address must be sent to the IPv6 care-of-address of the mobile node using IPv4-in-IPv6 tunneling. In other words, there is currently no mechanism to signal the binding between the Mobile IPv6 care-of address and an IPv4 address assigned to the mobile node in its home network, i.e. its IPv4 home address.

According to the Mobile IPv6, the binding between the care-of address and the home address of the mobile node is signaled by sending a Binding Update from the mobile node to the home agent or to the correspondent node. The home address of the mobile node will be included in the Home Address option in the Destination Options extension header, which must be present in the IPv6 packet containing the Binding Update. There are two ways to indicate which care-of address must be associated with this home address. The care-of address can be located either in the source address field of the IPv6 header or, if the mobile node wishes to use a care-of address different than the one in the source address, it can insert an alternate care-of address option in the Binding Update.

In the present invention, the binding between the IPv4 home address and the IPv6 care-of address is signaled by using an IPv6 address with an embedded IPv4 address in the Home Address option of the IPv6 packet containing the Binding Update. Upon detecting this special address format in the Home Address option, the home agent or the correspondent node will perform an update of binding, i.e. create a new binding between the embedded IPv4 home address and the IPv6 care-of address.

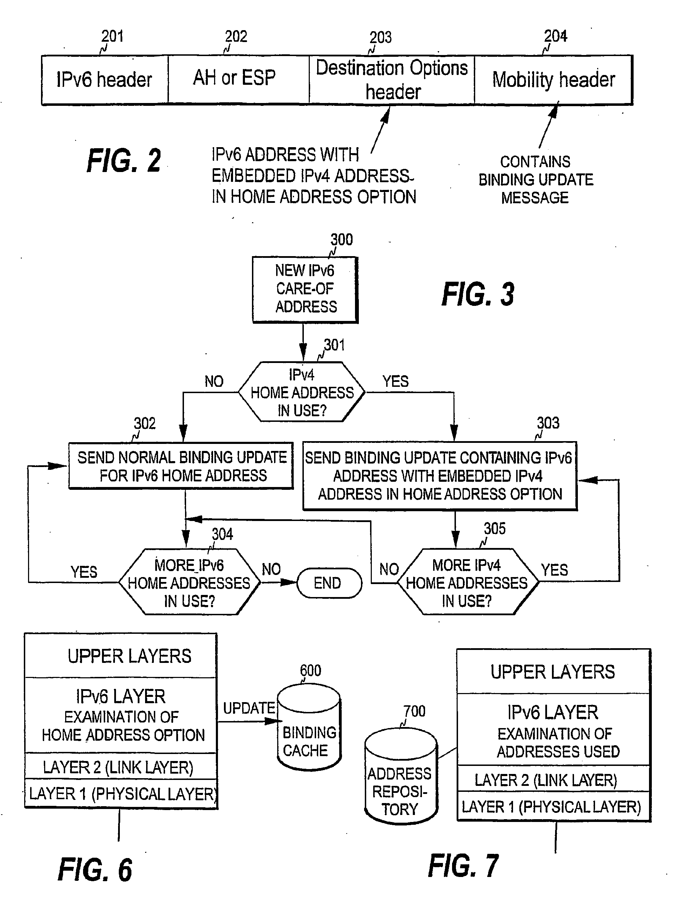

FIG. 2 illustrates a typical structure of an IPv6 packet containing the Binding Update. The packet comprises four parts: IPv6 header 201, Authentication header 202, Destination Options header 203, and Mobility header 204. Instead of the Authentication header, the packet may also include the Encapsulating Security Payload (ESP) header. The packet sent to the correspondent node does not normally include the Authentication header or the ESP header, but a packet sent to the home agent must contain either one of these two headers. As mentioned above, the IPv6 home address of the mobile node is in the Home Address option in the Destination options header 203. As also mentioned above, in the present invention an IPv6 address with an embedded IPv4 address is used in the Home Address option to indicate that a binding between the IPv4 home address and the new IPv6 care-of address should be created. In other words, the embedded IPv4 address is the said home address. The packet containing the Binding Update is in this context termed the binding update packet.

When the home agent receives a packet as shown in FIG. 2, i.e. a binding update packet containing an IPv4 address embedded in the IPv6 address in the Home Address option, it knows that the said IPv4 address is the IPv4 home address of the sending mobile node and that it has to update its binding cache for the mobile node. FIG. 3 illustrates the operation of the mobile node when it moves to a new care-of address. When the new care-of address is obtained (step 300), the mobile node examines whether an IPv4 home address is in use in the mobile node (step 301). If this is the case, the mobile node forms a packet according to FIG. 2, i.e. a binding update packet in which an IPv6 address with an embedded IPv4 home address is within the Home Address option of the Destination options header. This packet is then sent to the home agent to indicate that an update of binding is to be performed (step 303). A separate binding update packet is formed and sent for each IPv4 home address used by the mobile node (steps 303 and 305).

If no IPv4 address is used, the mobile node forms and sends a normal Binding Update (step 302), i.e. a binding update packet containing a conventional IPv6 address format. This is repeated for each IPv6 home address in use (step 304). This is also performed after a separate binding update packet has been sent for each IPv4 home address in use: the node checks whether one or more IPv6 home addresses are in use and sends a normal binding update packet for each of said addresses.

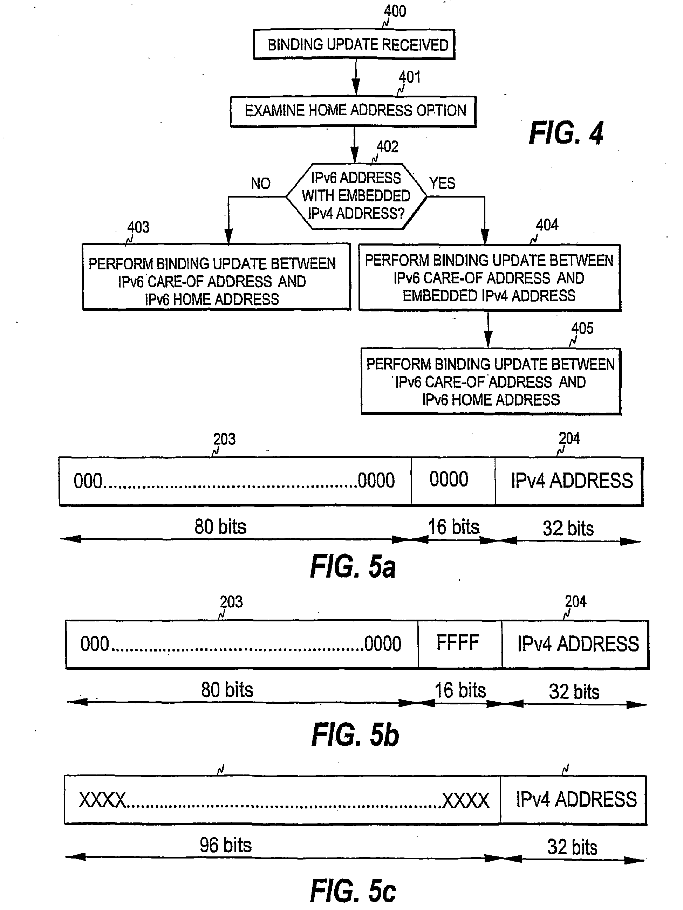

FIG. 4 illustrates the operation of the home agent when it receives the Binding Update. When this occurs (step 400), the home agent examines the Home Address option in the Destination options header (steps 401 and 402). If the Home Address option includes an IPv6 address with an embedded IPv4 address, i.e. if the address format according to the invention is used, the home agent creates a binding between the new IPv6 care-of address and the embedded IPv4 home address (step 404). As mentioned above, the new care-of address is normally located in the source address field of the IPv6 header, unless the mobile node wishes to use a care-of address different than the one in the source address, whereby the new care-of address is inserted in the corresponding option field within the Binding Update. A further update is normally performed between the IPv6 care-of address and the IPv6 home address, the latter being the whole address which contains the IPv4 home address (step 405). However, this step is not mandatory in view of the actual invention.

If it is detected at step 402 that the Home Address option includes a conventional IPv6 address, a normal binding update is performed between the IPv6 care-of address and the IPv6 home address (step 403). As is obvious from the above, the updates at steps 403 and 405 are otherwise similar, except that different address formats are involved.

If it is desirable to separate the bindings of the embedded IPv4 home address and the corresponding IPv6 address with the care-of address, it may be specified that only the binding of the IPv4 home address will be updated by means of the binding update packet described above (step 404). Furthermore, it is possible to define a flag in the binding update packet, the flag indicating whether both the embedded IPv4 address and the entire IPv6 address, or only the embedded IPv4 address will get a new binding (steps 404 and 405).

The present invention thus utilizes a special address format for the home address in the binding update packet. Addresses of this type have been designed for the transition from IPv4 to IPv6, and they allow a node to use a single IPv6 address which also contains an IPv4 address. Two types of such addresses, i.e. IPv6 addresses with an embedded IPv4 address, are particularly suitable for the present invention. FIG. 5a illustrates the first type, which is termed IPv4-compatible IPv6 address. This 128-bit address includes a 96-bit prefix consisting of zeros (0:0:0:0:0:0), followed by the IPv4 address in the low-order bits. FIG. 5b illustrates the other known address of this type, termed IPv4-mapped IPv6 address. This address includes a prefix consisting of 80 bits of zeros followed by 16 bits of ones. The low-order bits again form the 32-bit IPv4 address.

Should, for some reason, the use of these addresses for the purpose of the invention be contradictory to some other functionality, and thus forbidden, or should the use of these addresses be desirable for another purpose, it is possible to use a novel IPv6 address with an embedded IPv4 address for the purpose of the invention. Such an address may be as shown in FIG. 5c, i.e. a 128-bit address which includes a predetermined 96-bit prefix marked with letters X in the figure. Thus, in this case the home agent recognizes the address format on the basis of the predetermined prefix.

The procedure of the invention can also be used between the mobile node and its correspondent node, as the mobile node also uses the Binding Update for registering its current binding at the correspondent node. The correspondent node does not normally tunnel the packets to the care-of address in connection with route optimization. However, if IP Security Architecture (IPSec) is used between the mobile node and the correspondent node then there is a tunnel between the said parties and the invention can be utilized without first establishing the tunnel. In that case the correspondent node operates similarly as the home agent. Thus the correspondent node has to establish a tunnel, which it does not normally do, unless IPSec is used.

FIGS. 6 and 7 illustrate the insertion of the functionalities according to the invention into the home agent and mobile node, respectively. In the home agent (or in the correspondent node), the bindings are maintained in a binding cache 600. The binding update packets are received, through the two lowermost layers of the protocol stack, at the IP layer where it is examined whether the home address in the binding update packet includes an embedded IPv4 address. If this is so, a binding is created between the new care-of address and the embedded IPv4 address. Otherwise the bindings are created as discussed in connection with FIG. 4. In the mobile node, a set of addresses is maintained in an address repository 700, for example. The IP layer examines whether an IPv4 home address is in use in the mobile node and forms either a packet according to FIG. 2 or a packet containing a conventional Binding Update.

Although the invention was described above with reference to the examples shown in the appended drawings, it is obvious that the invention is not limited to these, but may be modified by those skilled in the art without departing from the scope of the invention. For example, should the standards vary, the implementation of the mechanism of the invention may be varied accordingly. Furthermore, the Binding Update does not necessarily have to be transmitted when the IPv6 care-of address changes, but it can be sent periodically, for example. Consequently, the method can be used also when the mobile node stays put, i.e. for providing connectivity.

## Claims

1. A method for providing mobility for IPv4 traffic in an IPv6 network (102) comprising at least one mobile node (MN), each of said mobile nodes being assigned a home address and additionally a care-of address while being located away from said home address, the method comprising the steps of:
- maintaining bindings in a first network node (HA, CN), each binding being an association of the home address of a mobile node with the care-of address of the mobile node; and
- sending a binding update packet to the first network node, said packet including a new care-of address and the home address of the mobile node,
**characterized by** the further steps of:
- indicating a binding between an IPv4 home address and the care-of address by inserting in said binding update packet as said home address an IPv6 address with an IPv4 home address embedded in it.

2. A method according to claim 1, wherein the sending step is performed when the care-of address changes.

3. A method according to claim 1, further comprising the step of forwarding IPv4 traffic destined for the IPv4 home address of the mobile node through an IPv6 tunnel from the first network node to the care-of address of the mobile node.

4. A method according to claim 1, wherein the first network node is the home agent (HA) of the mobile node (MN).

5. A method according to claim 1, wherein the first network node is a correspondent node (CN) communicating with the mobile node (MN).

6. A method according to claim 1, wherein said IPv6 address with the embedded IPv4 address is a 128-bit address comprising a predetermined prefix and the IPv4 address in the low-order bits of the address.

7. A method according to claim 6, wherein said prefix consists of 96 bits.

8. A method according to claim 1, further comprising the step of inserting a flag in said binding update packet, the flag indicating whether a binding between said IPv6 address and the care-of address is to be created.

9. A network node for a communication network including at least one mobile node (MN), each of said mobile nodes being assigned a home address and additionally a care-of address while being located away from said home address, the network node comprising:
- first means (600) for maintaining bindings for a mobile node (MN), each binding being an association of a home address of the mobile node with a care-of address of the mobile node;
- second means for receiving binding update packets, each binding update packet including a new care-of address for the mobile node and the home address of the mobile node, **characterized in that**
- the network node further comprises third means for examining whether the home address in the binding update packet includes an IPv6 address with an embedded IPv4 address; and
- the first means are adapted to create a binding between the new care-of address and the embedded IPv4 address, when the binding update packet includes the embedded IPv4 address.

10. A network node according to claim 9, wherein the network node is the home agent (HA) of the mobile node (MN).

11. A network node according to claim 9, wherein the network node is a correspondent node (CN) communicating with the mobile node (MN).

12. A mobile node for a communication network, the mobile node comprising:
- address means (700) for maintaining a set of addresses in the mobile node, the set including an IPv4 home address and an IPv6 care-of address;
- transmission means for sending a binding update packet, said binding update packet including a new IPv6 care-of address and the home address of the mobile node, **characterized in that**
- the mobile node further comprises means for inserting the IPv4 home address in said binding update packet, said means being adapted to insert an IPv6 address containing the IPv4 home address into said binding update packet.

13. A mobile node according to claim 12, wherein the transmission means are adapted to send the binding update packet when the IPv6 care-of address changes.

## Patentansprüche

1. Verfahren zum Bereitstellen von Mobilität für IPv4-Verkehr in einem IPv6-Netzwerk (102) mit wenigstens einem mobilen Knoten (MN), wobei jedem der mobilen Knoten eine Heimatadresse und zusätzlich eine Care-of-Adresse, während er entfernt von der Heimatadresse angeordnet ist, zugeordnet ist, wobei das Verfahren die Schritte umfasst:
Beibehalten von Verknüpfungen in einem ersten Netzwerkknoten (HA, CN), wobei jede Verknüpfung eine Zuordnung der Heimatadresse eines mobilen Knotens zu einer Care-of-Adresse des mobilen Knotens ist; und
Senden eines Verknüpfungsaktualisierungspakets zu dem ersten Netzwerkknoten, wobei das Paket eine neue Care-of-Adresse und die Heimatadresse des mobilen Knotens aufweist;
**gekennzeichnet durch** die weiteren Schritte:
Angeben einer Verknüpfung zwischen einer IPv4-Heimatadresse und der Care-of-Adresse, indem eine IPv6-Adresse mit einer darin eingebetteten IPv4-Heimatadresse als die Heimatadresse in das Verknüpfungsaktualisierungspaket eingefügt wird.

2. Verfahren nach Anspruch 1, bei dem der Sendeschritt durchgeführt wird, wenn sich die Care-of-Adresse ändert.

3. Verfahren nach Anspruch 1, ferner den Schritt umfassend, für die IPv4-Heimatadresse des mobilen Knotens vorgesehenen IPv4-Verkehr ausgehend von dem ersten Netzwerkknoten durch einen IPv6-Tunnel zu der Care-of-Adresse des mobilen Knotens weiterzuleiten.

4. Verfahren nach Anspruch 1, bei dem der erste Netzwerkknoten der Heimat-Agent (HA) des mobilen Knotens (MN) ist.

5. Verfahren nach Anspruch 1, bei dem der erste Netzwerkknoten ein Korrespondenzknoten (CN) ist, der mit dem mobilen Knoten (MN) kommuniziert.

6. Verfahren nach Anspruch 1, bei dem die IPv6-Adresse mit der eingebetteten IPv4-Adresse eine Adresse mit 128 Bit ist, die einen vorbestimmten Präfix und die IPv4-Adresse in den niederwertigen Bits der Adresse umfasst.

7. Verfahren nach Anspruch 6, bei dem der Präfix aus 96 Bit besteht.

8. Verfahren nach Anspruch 1, ferner den Schritt umfassend, ein Flag in das Verknüpfungsaktualisierungspaket einzufügen, wobei das Flag angibt, ob eine Verknüpfung zwischen der IPv6-Adresse und der Care-of-Adresse zu erzeugen ist.

9. Netzwerkknoten für ein Kommunikationsnetzwerk mit wenigstens einem mobilen Knoten (MN), wobei jedem der mobilen Knoten eine Heimatadresse und zusätzlich eine Care-of-Adresse, während er entfernt von der Heimatadresse angeordnet ist, zugeordnet ist, wobei der Netzwerkknoten umfasst:
eine erste Einrichtung (600), um Verknüpfungen für einen mobilen Knoten (MN) beizubehalten, wobei jede Verknüpfung eine Zuordnung einer Heimatadresse des mobilen Knotens zu einer Care-of-Adresse des mobilen Knotens ist;
eine zweite Einrichtung, um Verknüpfungsaktualisierungspakete zu empfangen, wobei jedes Verknüpfungsaktualisierungspaket eine neue Care-of-Adresse für den mobilen Knoten und die Heimatadresse des mobilen Knotens aufweist, **dadurch gekennzeichnet, dass**
der Netzwerkknoten ferner eine dritte Einrichtung umfasst, um zu überprüfen, ob die Heimatadresse in dem Verknüpfungsaktualisierungspaket eine IPv6-Adresse mit einer eingebetteten IPv4-Adresse aufweist; und
die erste Einrichtung ausgelegt ist, um eine Verknüpfung zwischen der neuen Care-of-Adresse und der eingebetteten IPv4-Adresse zu erzeugen, wenn das Verknüpfungsaktualisierungspaket die eingebettete IPv4-Adresse aufweist.

10. Netzwerkknoten nach Anspruch 9, wobei der Netzwerkknoten der Heimat-Agent (HA) des mobilen Knotens (MN) ist.

11. Netzwerkknoten nach Anspruch 9, wobei der Netzwerkknoten ein Korrespondenzknoten (CN) ist, der mit dem mobilen Knoten (MN) kommuniziert.

12. Mobiler Knoten für ein Kommunikationsnetzwerk, wobei der mobile Knoten umfasst:
eine Adresseinrichtung (700), um eine Gruppe von Adressen in dem mobilen Knoten beizubehalten, wobei die Gruppe IPv4-Heimatadresse und eine IPv6-Care-of-Adresse aufweist;
eine Übertragungseinrichtung, um ein Verknüpfungsaktualisierungspaket zu senden, wobei das Verknüpfungsaktualisierungspaket eine neue IPv6-Care-of-Adresse und die Heimatadresse des mobilen Knotens aufweist, **dadurch gekennzeichnet, dass**
der mobile Knoten ferner eine Einrichtung umfasst, um die IPv4-Heimatadresse in das Verknüpfungsaktualisierungspaket einzufügen, wobei die Einrichtung ausgelegt ist, eine IPv6-Adresse, die die IPv4-Heimatadresse enthält, in das Verknüpfungsaktualisierungspaket einzufügen.

13. Mobiler Knoten nach Anspruch 12, bei dem die Übertragungseinrichtung ausgelegt ist, um das Verknüpfungsaktualisierungspaket zu senden, wenn sich die IPv 6-Care-of-Adresse ändert.

## Revendications

1. Procédé permettant de fournir une mobilité pour un trafic IPv4 dans un réseau IPv6 (102) comprenant au moins un noeud mobile (MN), chacun desdits noeuds mobiles se voyant affecter une adresse nominale et en outre une adresse d'emprunt (care-of address) lorsqu'il est localisé loin de ladite adresse nominale, le procédé comprenant les étapes consistant à :
- maintenir des liaisons dans un premier noeud de réseau (HA, CN), chaque liaison étant une association de l'adresse nominale d'un noeud mobile avec l'adresse d'emprunt du noeud mobile ; et
- envoyer un paquet de mise à jour de liaison au premier noeud de réseau, ledit paquet incluant une nouvelle adresse d'emprunt et l'adresse nominale du noeud mobile,
**caractérisé par** les étapes supplémentaires consistant à :
- indiquer une liaison entre une adresse nominale IPv4 et l'adresse d'emprunt en insérant dans ledit paquet de mise à jour de liaison ainsi que dans ladite adresse nominale une adresse IPv6 avec une adresse nominale IPv4 intégrée dedans.

2. Procédé selon la revendication 1, dans lequel l'étape d'envoi est effectuée lorsque l'adresse d'emprunt change.

3. Procédé selon la revendication 1, comprenant en outre l'étape consistant à transférer le trafic IPv4 destiné à l'adresse nominale IPv4 du noeud mobile par l'intermédiaire d'un tunnel IPv6 depuis le premier noeud de réseau jusqu'à l'adresse d'emprunt du noeud mobile.

4. Procédé selon la revendication 1, dans lequel le premier noeud de réseau est l'agent nominal (HA) du noeud mobile (MN).

5. Procédé selon la revendication 1, dans lequel le premier noeud de réseau est un noeud correspondant (CN) communiquant avec le noeud mobile (MN).

6. Procédé selon la revendication 1, dans lequel ladite adresse IPv6 avec l'adresse IPv4 intégrée est une adresse de 128 bits comprenant un préfixe prédéterminé et l'adresse IPv4 dans les bits de poids faible de l'adresse.

7. Procédé selon la revendication 6, dans lequel ledit préfixe se compose de 96 bits.

8. Procédé selon la revendication 1, comprenant en outre l'étape consistant à insérer un drapeau dans ledit paquet de mise à jour de liaison, le drapeau indiquant si une liaison entre ladite adresse IPv6 et l'adresse d'emprunt doit être créée.

9. Noeud de réseau pour un réseau de communication incluant au moins un noeud mobile (MN), chacun desdits noeuds mobiles se voyant affecter une adresse nominale et en outre une adresse d'emprunt lorsqu'il est localisé loin de ladite adresse nominale, le noeud de réseau comprenant :
- des premiers moyens (600) pour maintenir des liaisons pour un noeud mobile (MN), chaque liaison étant une association d'une adresse nominale du noeud mobile avec une adresse d'emprunt du noeud mobile ;
- des deuxièmes moyens pour recevoir des paquets de mise à jour de liaison, chaque paquet de mise à jour de liaison incluant une nouvelle adresse d'emprunt pour le noeud mobile et l'adresse nominale du noeud mobile,
**caractérisé en ce que**
- le noeud de réseau comprend en outre des troisièmes moyens pour examiner si l'adresse nominale dans le paquet de mise à jour de liaison inclut une adresse IPv6 avec une adresse IPv4 intégrée ; et
- les premiers moyens sont adaptés pour créer une liaison entre la nouvelle adresse d'emprunt et l'adresse IPv4 intégrée, lorsque le paquet de mise à jour de liaison inclut l'adresse IPv4 intégrée.

10. Noeud de réseau selon la revendication 9, dans lequel le noeud de réseau est l'agent nominal (HA) du noeud mobile (MN).

11. Noeud de réseau selon la revendication 9, dans lequel le noeud de réseau est un noeud correspondant (CN) communiquant avec le noeud mobile (MN).

12. Noeud mobile pour un réseau de communication, le noeud mobile comprenant :
- des moyens d'adressage (700) pour maintenir un ensemble d'adresses dans le noeud mobile, l'ensemble incluant une adresse nominale IPv4 et une adresse d'emprunt IPv6 ;
- des moyens de transmission pour envoyer un paquet de mise à jour de liaison, ledit paquet de mise à jour de liaison incluant une nouvelle adresse d'emprunt IPv6 et l'adresse nominale du noeud mobile, **caractérisé en ce que**
- le noeud mobile comprend en outre des moyens pour insérer l'adresse nominale IPv4 dans ledit paquet de mise à jour de liaison, lesdits moyens étant adaptés pour insérer une adresse IPv6 contenant l'adresse nominale IPv4 dans ledit paquet de mise à jour de liaison.

13. Noeud mobile selon la revendication 12, dans lequel les moyens de transmission sont adaptés pour envoyer le paquet de mise à jour de liaison lorsque l'adresse d'emprunt IPv6 change.
